Europäisches Patentamt

European Patent Office

Office européen des brevets

(19)

(11) **EP 0 751 647 B1**

(12) **EUROPÄISCHE PATENTSCHRIFT**

(45) Veröffentlichungstag und Bekanntmachung des Hinweises auf die Patenterteilung:
**03.04.2002 Patentblatt 2002/14**

(51) Int Cl.⁷: **H04L 9/32**

(21) Anmeldenummer: **96109892.8**

(22) Anmeldetag: **19.06.1996**

(54) **Verfahren zum Verschlüsseln von Informationen in ATM-Systemen**

Method for encrypting information in ATM systems

Procédé de chiffrage d'information dans un système ATM

(84) Benannte Vertragsstaaten:
**AT BE CH DE FR GB IT LI**

(30) Priorität: **30.06.1995 DE 19524021**

(43) Veröffentlichungstag der Anmeldung:
**02.01.1997 Patentblatt 1997/01**

(73) Patentinhaber: **SIEMENS AKTIENGESELLSCHAFT
80333 München (DE)**

(72) Erfinder: **Horbach, Christian, Dr.-Ing.
82110 Germering (DE)**

(56) Entgegenhaltungen:
**EP-A- 0 632 616          US-A- 4 679 236**

EP 0 751 647 B1

**Beschreibung**

Die Erfindung betrifft ein Verfahren gemäß dem Oberbegriff des Patentanspruchs 1.

Heute werden Dienste, die eine Mehrzahl von Diensten integrieren und dem Teilnehmer Interaktionen erlauben unter dem Sammelbegriff interaktive Multimediadienste zusammengefaßt. Darunter werden spezielle Dienste, wie beispielsweise Video on Demand oder Distant Learning verstanden, die von einer beim Teilnehmer installierten Endeinrichtung in Anspruch genommen werden. Es ist naheliegend, als solche Endeinrichtungen Fernsehgeräte zu benutzen, da diese zum einen bereits in großer Zahl beim Teilnehmer vorhanden sind und zum anderen dem Teilnehmer die Möglichkeit bieten,auf optischem oder akustischem Wege einen Dialog zu dem jeweiligen Diensteanbieter zu führen.

Zur Behandlung dieser Abläufe werden spezielle Steuervorrichtungen beim Teilnehmer eingesetzt. Diese Steuervorrichtungen sind als Set-Top-Boxen oder Netzabschlußvorrichtungen ausgebildet und werden als Zusatzeinrichtung dem zugeordneten Fernsehgerät zugeschaltet. Der technologische Trend zu immer leistungsfähigeren und kostengünstigeren Speichern hat dazu geführt, daß insbesondere der Abruf von Video-Filmen (Video on demand) technisch realisierbar geworden ist und auch zunehmend von den verantwortlichen Diensteanbietern bereitgestellt wird. Die Video-Filme sind dabei gegebenenfalls in komprimierter Form in großen digitalen Speichervorrichtungen, die als Content Provider bezeichnet werden, abgespeichert.

Bei dem gewünschten Abruf eines Video-Filmes wird von dem betreffenden Teilnehmer über ein Datenübertragungsnetz eine Verbindung zu den in Frage kommenden Content Providern hergestellt und die Auswahl und Wiedergabe der gewünschten Video-Filme in Abhängigkeit von den Eingaben des Teilnehmers gesteuert. Als Schnittstelle zwischen Teilnehmer und dem betreffenden Datenübertragungsnetz dient die Netzabschlußvorrichtung. Als Datenübertragungsnetz werden beim Stand der Technik Koaxialnetze verwendet.Im Sinne einer Broadcast-Übertragung werden dann die Video-Filmsignale an einem Punkt des Datenübertragungsnetzes eingespielt und allen Teilnehmern zugeführt (Punkt zu Multipunkt Übertragung). Problematisch dabei ist aber, daß der Abruf eines Video Filmes eines Teilnehmers dazu führt, daß dieser Film jedem Teilnehmer zugespielt wird. Zur Behebung dieses Mangels müssen die Video-Filmsignale verschlüsselt werden, wobei nur der den Film abrufende Teilnehmer den Schlüssel kennt, die Signale damit an seinem Endgerät wieder entschlüsselt und sichtbar macht.

Beim Stand der Technik sind zur Lösung dieses Problemes verschiedene Verfahren vorgeschlagen worden. So ist aus der europäischen Patentanmeldung EP - 0 632 616 A1 ein Verfahren zur Datensicherung in einem B-ISDN Telekommunikationssystem bekannt. Darin wird ein public-key Verfahren offenbart, mittels dem die Netzabschlußvorrichtung (Teilnehmereinrichtung) einer Steuervorrichtung einen öffentlichen Schlüssel (public-key) zusendet, der zu dem,der zugeordneten Netzabschlußvorrichtung eigenen privaten Schlüssel (private-key) paßt. Daraufhin verschlüsselt die Steuervorrichtung einen weiteren Schlüssel (session-key) mit dem öffentlichen Schlüssel und sendet diesen downstream.Damit ist nur die adressierte Netzabschlußvorrichtung in der Lage, mit Hilfe ihres privaten Schlüssels den weiteren Schlüssel zu bestimmen. Problematisch an einer derartigen Vorgehensweise ist der hohe Rechenaufwand zur Bestimmung von Schlüsselpaaren (private/ public key) zum Ver- und zum Entschlüsseln.

Der Erfindung liegt die Aufgabe zugrunde, einen Weg aufzuzeigen, wie Informationen in einem Fernsehübertragungsnetz mit möglichst geringem Aufwand verschlüsselt werden können, so daß anderen Teilnehmern diese Informationen nicht zugänglich sind.

Vorteilhaft an der Erfindung ist insbesondere, daß bereits bekannte Verfahren wie beispielsweise das für Mobiltelefone verwendete Verfahren nach dem GSM-Standard auf die Übertragung von Informationen in einem Fernsehübertragungsnetz angepaßt wird. Damit ist insbesondere der Vorteil verbunden, daß die beim Stand der Technik erwähnten Nachteile vermieden werden können.Allerdings müssen hier Vorkehrungen getroffen werden, die den speziellen Eigenheiten eines Fernsehübertragungsnetzes gerecht werden.

Vorteilhafte Ausgestaltungen der Erfindung sind in den Unteransprüchen angegeben.

Gemäß Anspruch 2 ist vorgesehen,daß eine weitere Prozedur wenigstens 2 jeweils eine Pseudozufallsfolge erzeugende Generatoren aufweist, die im Zuge einer gegenseitigen Beeinflussung eine weitere Zufallsfolge erzeugen.Damit ist der Vorteil verbunden, daß der damit erzeugte Algorithmus keinen Rückschluß auf die Verschlüsselungsgröße erlaubt. Die Pseudozufallsfolge kann dabei als Fibonacci-Reihe ausgebildet sein.

Gemäß Anspruch 3 ist vorgesehen, daß die zu übertragenden Informationen der weiteren Prozedur eingangsseitig zugeführt werden und nach Maßgabe des darin enthaltenen Algorithmus verschlüsselt dieselbe wieder verlassen, wobei der beliebige Zahlenwert sowie ein weiterer Wert als Steuergrößen dienen.

Gemäß Anspruch 4 ist vorgesehen, daß die weitere Größe die Rahmennummer des Zeitschlitzes ist.Damit ist der Vorteil verbunden, daß der für die Übertragung von Informationen via Mobilfunk definierte GSM Standard auf die Übertragung innerhalb eines Fernsehübertragungsnetzes angepaßt werden kann.

Gemäß Anspruch 5 ist vorgesehen, daß die Übertragung der Informationen zwischen einer der peripheren Steuervorrichtungen und der wenigstens einen Steuervorrichtung über ein ATM-Netz erfolgt, das als Fernsehübertragungsnetz ausgebildet ist. Damit ist der Vorteil verbunden,daß eine einfache Schnittstelle zu anderen Übertragungsnetzen bereitgestellt werden kann.

Gemäß Anspruch 6 ist vorgesehen, daß mehrere Schlüsselwerte vereinbart werden, mittels denen die zur Teilnehmerendeinrichtung übertragenen Informationen verschlüsselt werden. Damit ist der Vorteil verbunden, daß auch Multicast-Verbindungen gesteuert werden können.

Gemäß Anspruch 7 ist vorgesehen, daß die im Informationsteil der ATM-Zelle gespeicherten Informationen mit dem weiteren Zahlenwert verschlüsselt werden und die im Zellenkopf enthaltene Adreßinformationen gegebenenfalls unverschlüsselt bleiben. Damit ist der Vorteil verbunden, daß der Verbindungsaufbau schnell und effizient bei hoher Informationssicherheit durchgeführt werden kann.

Die Erfindung wird im folgenden anhand eines Ausführungsbeispiels näher erläutert. Es zeigen

Figur 1     eine Netzanordnung, auf der das erfindungsgemäße Verfahren zum Ablauf gelangt.

Figur 2     einen Zufallszahlengenerator, mittels dem die Informationen verschlüsselt werden.

Figur 3     eine Aufwandsabschätzung bei normaler Bitbreite

Figur 4     eine Aufwandsabschätzung bei reduzierter Bitbreite

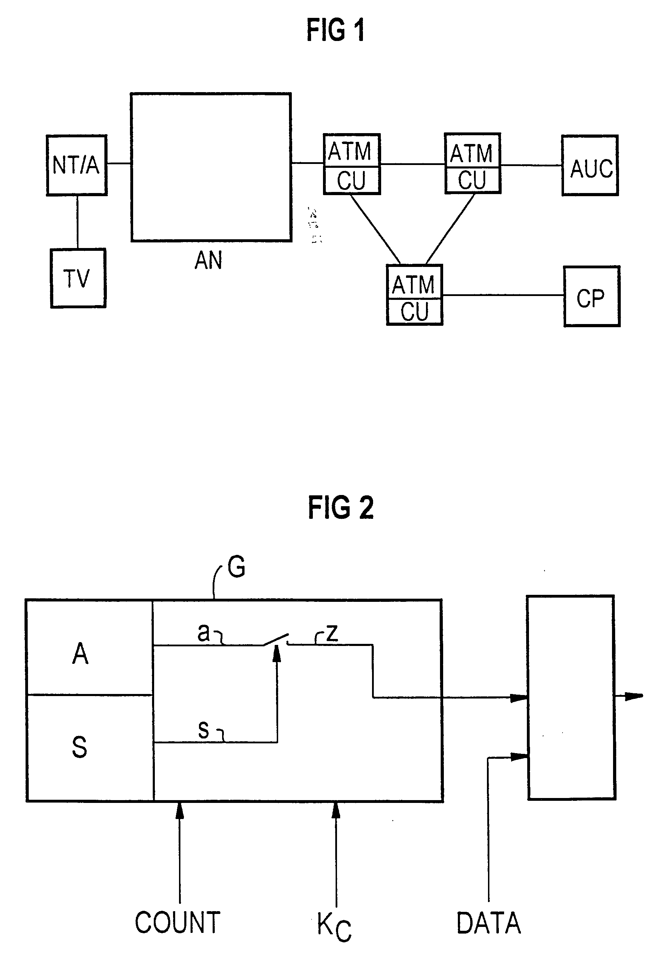

In Figur 1 ist eine Anordnung aufgezeigt, auf der das erfindungsgemäße Verfahren zum Ablauf gelangt. Dabei sind die peripheren Steuervorrichtungen als Netzabschlußvorrichtung NT/A ausgebildet, wobei in Figur 1 lediglich eine dieser Netzabschlußvorrichtungen NT/A aufgezeigt ist. An dieselben sind jeweils handelsübliche Fernsehgeräte TV als Endgeräte angeschlossen. Optional können auch Personal Computer (PC) verwendet werden. In die Netzabschlußvorrichtung NT/A kann vom Teilnehmer bei Bedarf ein Datenträger mechanisch eingeführt werden, der als Chipkarte ausgebildet sein kann. Diese enthält in bekannter Weise einen Prozessor mit Speichermitteln, in denen einen Schlüssel $K_i$ sowie gegebenenfalls Prozeduren $A_3$, $A_8$ abgespeichert sind, wobei der Schlüssel $K_i$ den Namen des Teilnehmers enthält. Die Netzabschlußvorrichtungen NT/A dienen als Schnittstelle der Teilnehmer zum Zugangsnetz (Access Network) AN, das als Koaxialnetz ausgebildet ist und über das Fernsehsignale zu den einzelnen Teilnehmern hin im Sinne einer Broadcast Übertragung geleitet werden.

Das Fernsehübertragungsnetz AN ist weiterhin mit einem Vermittlungsnetz verbunden. Dieses wird aus einer Mehrzahl von Vermittlungseinrichtungen ATMN gebildet.Dabei handelt es sich bei vorliegendem Ausführungsbeispiel um Vermittlungseinrichtungen, die Informationssignale nach dem asynchronen Transfermodus (ATM) übertragen und durchschalten. Die Ausbildung des Vermittlungsnetzes als ATM-Netz ist nicht zwingend, so daß auch andere Übertragungsprinzipien zur Anwendung gelangen können. An die Vermittlungseinrichtungen ATMN sind im weiteren Steuervorrichtungen AUC sowie Speichervorrichtungen CP angeschlossen wobei letztere die Funktion von Content Providern aufweisen. In den Steuervorrichtungen AUC wird zum einen die Berechtigung des Teilnehmerzugangs zum Netz ermittelt und zum anderen die Steuerungsvorgänge zur Übertragung der in den Content Providern CP gespeicherten Informationen zum betreffenden Teilnehmern gesteuert. Im Ausführungsbeispiel wird davon ausgegangen, daß diese Informationen Video-Filme sind,die in den Content Providern CP abgespeichert sind.

Im folgenden soll nun näher erläutert werden, wie die Verschlüsselung der Informationen durchgeführt werden soll. Dabei soll erfindungsgemäß der für Mobilfunknetze verwendete GSM Standard zur Anwendung gelangen.

Von einem bestimmten Teilnehmer wird der Abruf eines Video-Filmes erwünscht. Zu Beginn des hierzu erforderlichen Verbindungsaufbaus wird von der zugeordneten Netzabschlußvorrichtung NT/A nun der Schlüssel $K_i$ der zugeordneten Steuervorrichtung AUC zugesendet.Im Zuge der Initialisierung des Teilnehmers ist dieser Schlüssel $K_i$ auch dort abgespeichert worden. Im folgenden nimmt nun die betreffende Steuervorrichtung AUC einen Vergleich ihres eigenen abgespeicherten Schlüssels mit dem von der Netzabschlußeinrichtung NT/A übertragenen Schlüssel $K_i$ vor. Stimmen beide Werte überein, ist der Teilnehmer authentisiert.

Im Anschluß daran wird von der betreffenden Steuervorrichtung AUC ein beliebiger Zahlenwert RAND ermittelt.In der Regel erfolgt dies über Zuhilfenahme eines Zufallszahlengenerators. Der Zahlenwert RAND wird nun zusammen mit dem Schlüssel $K_i$ als Eingangsgröße einer Prozedur $A_3$ sowie einer weiteren Prozedur $A_8$ zugeführt. Beide Prozeduren laufen in der betreffenden Steuervorrichtung AUC ab. Mit Hilfe der Prozedur $A_3$ wird nun als Ergebnis der Berechnungen ein Zahlenwert SRES ermittelt sowie mit Hilfe der Prozedur $A_8$ eine Verschlüsselungsgröße $K_c$.

Anschließend wird der Zahlenwert RAND der den Verbindungsaufbau initiierenden Netzabschlußeinrichtung NT/A zugeführt und dort zusammen mit dem dort abgespeicherten Schlüssel $K_i$ einer der Prozedur $A_3$ gleich ausgebildeten Prozedur als Eingangsgröße zugeführt. Diese Prozedur gelangt in der betreffenden Netzabschlußeinrichtung NT/A zum Ablauf und ist in Bezug auf die Codierung identisch mit der Prozedur $A_3$, die in der Steuervorrichtung AUC zum Ablauf gelangt. Gleichermaßen gelangt hier eine der Prozedur $A_8$ identische ausgebildete Prozedur zum Ablauf,der als Eingangsgrößen ebenfalls den Schlüssel $K_i$ sowie den Zahlenwert RAND zugeführt werden. Als Ergebnis beider Berechnungen werden die Verschlüsselungsgröße $K_c$ sowie der Zahlenwert SRES ermittelt.

Beide in der betreffenden Netzabschlußvorrichtung NT/A ermittelten Werte SRES, $K_c$ werden nun der in Frage kommenden Steuervorrichtung AUC zugeführt und dort mit den dort mit den hier berechneten beiden Zahlenwerten SRES, $K_c$ verglichen. Im Falle einer Übereinstimmung, kann die Übertragung der Video-Filmsignale zu der betreffenden Netzabschlußeinrichtung NT/A vorgenommen werden. Zu diesem Zweck werden sie in ATM-Zellen gepackt.

Vor dem eigentlichen Übertragungsvorgang wird die Verschlüsselung der Signale mit der ermittelten Verschlüsselungsgröße $K_c$ vorgenommen. Da der betreffende Teilnehmer hat diese ebenfalls abgespeichert hat, ist er somit in der Lage, die verschlüsselten Video-Filmsignale in entsprechender Weise in seiner Netzabschlußvorrichtung NT/A zu entschlüsseln und auf seinem Fernsehgerät TV sichtbar zu machen.

Die Verschlüsselung der Video Filmsignale selbst erfolgt mit Hilfe einer Prozedur $A_5$. Diese gelangt auf einer Vorrichtung G gemäß Figur 2 zum Ablauf. Die Vorrichtung G ist sowohl in die Vermittlungseinrichtungen ATMN als auch in der den Verbindungsaufbau initiierenden Netzabschlußvorrichtung NT/A integriert. Die Video-Filmsignale werden der Vorrichtung G als ATM-Zellen zugeführt. Als Steuergrößen werden weiterhin eine Größe COUNT sowie die Verschlüsselungsgröße $K_c$ verwendet. Bei der Größe COUNT handelt es sich um die Rahmennummer des Zeitschlitzes. Sie muß bei der Übertragung über das Fernsehübertragungsnetz AN belegt werden. Aus diesem Grund wird vorgesehen, daß die Hardware eine automatische Rahmennummerierung unterstützt. Dies hat außerdem den Vorteil, daß damit eine Synchronisierung beim Wechsel der Verschlüsselungsgröße gegeben ist. Zur Realisierung der automatischen Rahmennummerierung werden Zähler in den Steuervorrichtungen CU der Knoten ATMN sowie den Netzabschlußvorrichtungen NT/A vorgesehen. Für eine zum Teilnehmer gesendete ATM-Zelle (Downstream-Zelle) gilt dann der COUNT-Wert des betreffenden Rahmens, in dem sich das erste Byte der ATM-Zelle befindet. Im Prinzip ist damit eine Hardware-Uhr realisiert, mit der auch der Wechsel der Verschlüsselungsgröße durchgeführt werden:

Nachdem eine neue Verschlüsselungsgröße festgelegt ist, wird von der Firmware der Steuervorrichtung CU der aktuelle COUNT-Wert dem betreffenden Hardware-Zähler entnommen. Im weiteren wird nun eine definierte Größe addiert und der Aktivierungsbefehl mit dem berechneten COUNT-Wert an die Hardware der Steuervorrichtung CU sowie die Netzabschlußvorrichtung NT/A übertragen. In dieser wird nun der Hardware von der Firmware mitgeteilt, ab welchem COUNT-Wert die neue Verschlüsselungsgröße gilt.

Wie aus Figur 2 ersichtlich, weist die Prozedur $A_5$ zwei Generatoren A und S auf. Diese erzeugen jeweils 2 Fibonaccireihen $a_i$ und $s_i$ nach einem vorher festgelegten Algorithmus.

$$A: \qquad a_i = a_{i-55} + a_{i-24} \quad \mod 2$$

$$S: \qquad s_i = s_{i-52} + s_{i-19} \quad \mod 2$$

Damit sind 2 Zufallsfolgen $a_i$ und $s_i$ definiert, wobei $a_i, s_i \, \varepsilon \, \{0,1\}$. Die Vorbelegung der Werte $a_{-55}$ bis $a_{-1}$ sowie $s_{-52}$ bis $s_{-1}$ wird aus den Wert COUNT und die Verschlüsselungsgröße $K_c$ bestimmt, die als Steuergrößen der Prozedur $A_5$ zugeführt werden. Die Zufallsfolge $s_i$ trifft dabei die Auswahl, welche der Elemente der Zufallsfolge $a_i$ verworfen werden und welche Elemente akzeptiert und ausgangsseitig gesendet werden. Weist beispielsweise $s_i$ den Wert 1 auf, wird der entsprechende Wert von $a_i$ akzeptiert. Weist $s_i$ den Wert 0 auf, so wird der betreffende $a_i$ Wert verworfen. Unter der Voraussetzung, daß die Werte 0 und 1 der Zufallsfolge $s_i$ in etwa gleich verteilt sind, wird damit im Mittel jedes zweite Element der Zufallsfolge $a_i$ verworfen. Aus diesem Grund müssen die beiden Fibonacci-Generatoren A und S mindestens die doppelte Symbolrate produzieren, wie ausgangsseitig als Zufallsfolge $z_i$ benötigt wird. Außerdem muß ein Ausgleich für die Schwankungen in der Symbolrate von $z_i$ geschaffen werden, die durch das statistische Verwerfen von Elementen $a_i$ zustande kommt.

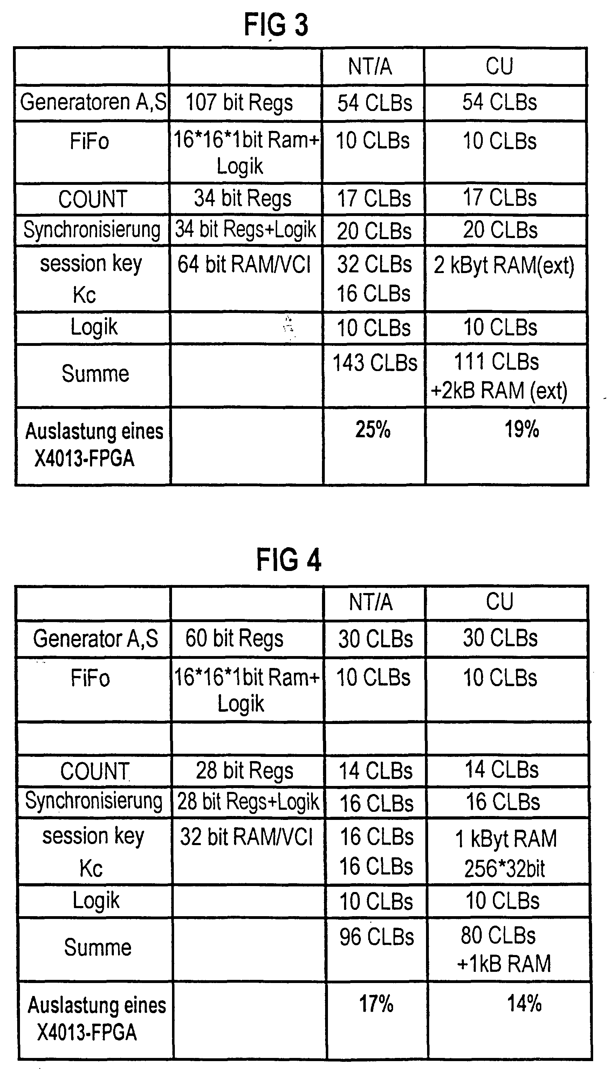

In den Figuren 3 und 4 ist aufgezeigt, wie der Algorithmus $A_5$ in der Praxis realisiert werden kann, wobei es sich hier um die Abschätzung des Hardware Aufwandes handelt. Zunächst muß dabei die Breite der Variabeln COUNT abgeschätzt werden:

Dabei gilt es zu beachten, daß beim GSM Standard (Mobilfunk), die Datenrate sowie die typische Verbindungsdauer sich in erheblichem Maße unterscheidende Werte aufweisen. So sind beim Fernsehübertragungsnetz AN für die Übertragung von beispielsweise eines Videofilmes sowohl Datenrate als auch Verbindungsdauer länger als bei einer Mobilfunkverbindung.Einer Datenrate von 13 kBit/s sowie einer typischen Verbindungsdauer von 15 min beim GSM Standard stehen hier 10 MBit/s (MPEG2) sowie 90 min Übertragungsdauer des Videofilmes gegenüber. Dies ergibt einen Faktor in der Größenordnung von 4600, d.h. es werden etwa 12 Bit mehr benötigt. Größenordnungsmäßig sollte dabei die Variable COUNT etwa 34 Bit breit sein. Ein weiterer Faktor sind die FIFO-Register,die wegen der schwankenden Datenrate der Fibonacci-Generatoren A und S vorgesehen werden müssen. Die Register müssen dabei Lücken in der Zufallsfolge von n Bit ausgleichen, so daß die ATM-Zelle mit einer Wahrscheinlichkeit von mindestens $1 \times 10^{-10}$ decodiert werden kann. Die Wahrscheinlichkeit, daß n Bit in Folge verworfen werden, beträgt $2^{-n}$. Daraus ergibt sich mit $10^{-10} > 2^{-n}$ daß $n \geq 33$ sein muß. Das Register FIFO muß also 33 Bit $\leq 5$ Byte ausgleichen können. In der Tabelle gemäß Figur 3 wird der Hardwareaufwand in Form von logischen Modulen (CLB = Configurable Logic Block) in einem ASIC Baustein abgeschätzt. Dabei wird ein Baustein der Firma Xilinx (X4013-FPGA) verwendet. Ein derartiger Baustein weist 576 CLB's auf, wobei 1 CLB zwei Register und zwei Look-Up-Table mit vier Eingängen aufweist. Weiterhin kann ein CLB auch als 16 mal 2 Bit RAM konfiguriert werden. Wie aus der letzten Zeile hervorgeht, beträgt die Auslastung eines derartigen ASIC Bausteins für die Netzabschlußvorrichtung NT/A 25 % und für die Einrichtung CU, die in den Knoten realisiert wird, 19 %.

In Figur 4 ist weiterhin die Abschätzung für den Fall aufgezeigt, daß eine Reduzierung der Bitbreite der Variablen durchgeführt wird:

Hier wird davon ausgegangen, daß die Verschlüsselungsgröße $K_C$ auf 32 Bit reduziert wird und die Variable COUNT auf 28 Bit, wobei das Ergebnis von 28 Bit durch die Forderung zustande kommt, daß die Variable COUNT sich während eines Films (10 MBit/s, 90 min nicht wiederholen soll. Weiterhin wird vorgeschlagen, die Fibonacci-Generatoren A und S auf insgesamt 60 Bit = 32 + 28 zu reduzieren. Die entsprechenden Verhältnisse sind in Figur 4 aufgezeigt. Damit ergibt sich eine Auslastung der ASIC Bausteine auf 17 bzw. 14 %.

Die Verschlüsselung der Informationben mit der Verschlüsselungsgröße $K_c$ kann entweder für jeden verschlüsselten Kanal oder für jede Netzabschlußvorrichtung NT/A erfolgen. Die getrennte Verschlüsselung eines jeden verschlüsselten Kanals ist notwendig, wenn einzelne verschlüsselten Kanäle als Multicast definiert werden sollen. So ist es bei dem GSM Verfahren nicht möglich, mit zwei Teilnehmern die gleichen Verschlüsselungsgröße zu vereinbaren. Um eine Multicast Verbindung zu ermöglichen, muß der Knoten in der Lage sein, zwei Variablen RAND (RAND1, RAND2) zu generieren. Beide bewirken dann für zwei Teilnehmer sowie deren Kennung $K_{i1}$ und $K_{i2}$ die gleichen Verschlüsselungsgrößen $K_{c1} = K_{c2}$. Um dies zu ermöglichen, muß ein invertierbarer Algorithmus für die Prozedur $A_8$ gewählt werden, damit die Steuervorrichtung AUC in der Lage ist, aus einer vorgegebenen Verschlüsselungsgröße $K_{c2}$ und einer Kennung $K_{i2}$ die Zufallszahl RAND2 zu berechnen. Die Multicast-Fähigkeit erfordert außerdem, getrennte Verschlüsselung für jeden verschlüsselten Kanal.

**Patentansprüche**

1. Verfahren zum Verschlüsseln von Informationen in ATM Systemen, mit einer Mehrzahl von peripheren Steuervorrichtungen (NT/A) sowie einer weiteren Mehrzahl von Netzknoten (ATMN), an die jeweils zumindest eine Steuervorrichtung (AUC) angeschlossen ist und über die Informationen zu jeweils einer der peripheren Steuervorrichtungen (NT/A) und umgekehrt mit Hilfe einer bestehenden Verbindung geleitet werden,
**dadurch gekennzeichnet,**
**dass** die Übertragung der Informationen zwischen einer der peripheren Steuervorrichtungen (NT/A) und der wenigstens einen Steuervorrichtung (AUC) nach dem asynchronen Transfermodus (ATM) erfolgt,
**dass** im Sinne des GSM-Standards zu Beginn eines von einer der peripheren Steuervorrichtungen (NT/A) initiierten Verbindungsaufbaus ein Schlüssel($K_i$) der wenigstens einen Steuervorrichtung (AUC) zugeführt wird, wo die Korrektheit dieses Schlüssels ($K_i$) ermittelt wird,
**dass** im Anschluß daran von der Steuervorrichtung (AUC) ein beliebiger Zahlenwert (RAND) ermittelt wird, der zusammen mit dem Schlüssel ($K_i$) als Eingangsgröße einer ersten und zweiten Prozedur (A3, A8) zugeführt wird, wobei mit Hilfe der ersten Prozedur (A3) ein weiterer Zahlenwert (SRES) und mit Hilfe der zweiten Prozedur (A8) ein Schlüsselwert (Kc) ermittelt wird,
**dass** der beliebige Zahlenwert (RAND) der betreffenden peripheren Steuervorrichtungen (NT/A) zugeführt wird, und dort zusammen mit dem Schlüssel ($K_i$) einer mit der ersten Prozedur (A3) identischen Prozedur zugeführt wird, als Ergebnis eine Größe ermittelt wird und im Anschluß daran diese Größe zu der wenigstens einen Steuervorrichtung (AUC) gesendet wird, wo diese Größe mit dem weiteren Zahlenwert (SRES) verglichen wird,
und **dass** lediglich bei einem positiven Vergleich die Übertragung der Informationen mit dem Schlüsselwert (Kc) verschlüsselt zwischen der wenigstens einen Steuervorrichtung (AUC) und der betreffenden peripheren Steuervorrichtungen (NT/A) erfolgt, wobei die im Zellenkopf enthaltene Adreßinformation gegebenenfalls unverschlüsselt bleiben.

2. Verfahren nach Anspruch 1
**dadurch gekennzeichnet,**
**daß** eine weitere Prozedur ($A_5$) wenigstens 2 jeweils eine Pseudozufallsfolge ($a_i,s_i$) erzeugende Generatoren (A,S) aufweist, die im Zuge einer gegenseitigen Beeinflussung eine weitere Zufallsfolge ($z_i$) erzeugen.

3. Verfahren nach Anspruch 1 oder 2
**dadurch gekennzeichnet,**
**daß** die zu übertragenden Informationen der weiteren Prozedur ($A_5$) eingangsseitig zugeführt werden und nach Maßgabe des darin enthaltenen Algorithmus verschlüsselt dieselbe wieder verlassen, wobei der beliebige Zahlenwert (RAND) sowie ein weiterer Wert (COUNT) als Steuergrößen dienen.

4. Verfahren nach einem der vorstehenden Ansprüche,
**dadurch gekennzeichnet,**

**daß** die Steuergröße (COUNT) die Rahmennummer des Zeitschlitzes ist.

5. Verfahren nach einem der vorstehenden Ansprüche,
**dadurch gekennzeichnet,**
**daß** die Übertragung der Informationen zwischen einer der peripheren Steuervorrichtungen (NT/A) und der wenigstens einen Steuervorrichtung (AUC) über ein ATM-Netz erfolgt, das als Fernsehübertragungsnetz ausgebildet ist.

6. Verfahren nach einem der vorstehenden Ansprüche,
**dadurch gekennzeichnet,**
**daß** mehrere Schlüsselwerte ($K_c$) vereinbart werden, mittels denen die zur Teilnehmerendeinrichtung übertragenen Informationen verschlüsselt werden.

**Claims**

1. Method for encrypting information in ATM systems, having a number of peripheral control apparatuses (NT/A) and having a further number of network nodes (ATMN) to each of which at least one control apparatus (AUC) is connected and via which information is passed to in each case one of the peripheral control apparatuses (NT/A) and vice versa by means of an existing connection,
**characterized**
**in that** the information is transmitted between one of the peripheral control apparatuses (NT/A) and the at least one control apparatus (AUC) using the asynchronous transfer mode (ATM),
**in that**, in the sense of the GSM Standard, at the start of the setting up of a connection initiated by one of the peripheral control apparatuses (NT/A), a key ($K_i$) is supplied to the at least one control apparatus (AUC), where the correctness of this key ($K_i$) is determined,
**in that**, following this, the control apparatus (AUC) determines a random numerical value (RAND) which is supplied, together with the key ($K_i$), as an input variable to a first and a second procedure (A3, A8), with a further numerical value (SRES) being determined by means of the first procedure (A3), and a key value (Kc) being determined by means of the second procedure (A8),
**in that** the random numerical value (RAND) is supplied to the respective peripheral control apparatuses (NT/A), where it is supplied, together with the key ($K_i$) to a procedure which is identical to the first procedure (A3), a variable is determined as the result, and, following this, this variable is sent to the at least one control apparatus (AUC), where this variable is compared with the further numerical value (SRES),

and **in that** the information together with the key value (Kc) is transmitted, in encrypted form, between the at least one control apparatus (AUC) and the relevant peripheral control apparatus (NT/A) only if the comparison is positive, with the address information contained in the cell header possibly remaining unencrypted.

2. Method according to Claim 1,
**characterized**
**in that** a further procedure ($A_5$) has at least two generators (A, S), which each produce a pseudo-random sequence ($a_i$, $s_i$) and produce a further random sequence ($z_i$) in the course of mutual influencing.

3. Method according to Claim 1 or 2,
**characterized**
**in that** the information to be transmitted is supplied to the input side of the further procedure ($A_5$) and, depending on the algorithm contained therein, leave it once again in encrypted form, with the random numerical value (RAND) and a further value (COUNT) being used as control variables.

4. Method according to one of the preceding claims,
**characterized**
**in that** the control variable (COUNT) is the frame number of the timeslot.

5. Method according to one of the preceding claims,
**characterized**
**in that** the information is transmitted between one of the peripheral control apparatuses (NT/A) and the at least one control apparatus (AUC) via an ATM network, which is in the form of a television transmission network.

6. Method according to one of the preceding claims,
**characterized**
**in that** a number of key values ($K_c$) are agreed, by means of which the information transmitted to the subscriber terminal are encrypted.

**Revendications**

1. Procédé pour chiffrer des informations dans des systèmes ATM, comprenant une multiplicité de dispositifs de commande périphériques (NT/A) et une autre multiplicité de noeuds de réseau (ATMN), auxquels est raccordé respectivement au moins un dispositif de commande (AUC) et par l'intermédiaire desquels des informations sont transmises à l'aide d'une liaison existante respectivement à l'un des dispositifs de commande périphériques (NT/A) et inversement,
**caractérisé par le fait que**
la transmission des informations entre l'un des dispositifs de commande périphériques (NT/A) et le ou les dispositifs de commande (AUC) s'effectue selon le mode de transfert asynchrone (ATM),

par rapport au standard GSM, on envoie au début d'un établissement de liaison déclenché par l'un des dispositifs de commande périphériques (NT/A) un code ($K_i$) au au moins un dispositif de commande (AUC), où l'exactitude de ce code ($K_i$) est déterminée,

ensuite, le dispositif de commande (AUC) détermine une valeur numérique quelconque (RAND) qui est envoyée conjointement au code ($K_i$) comme grandeur d'entrée à une première et à une deuxième procédure (A3, A8), une autre valeur numérique (SRES) étant déterminée à l'aide de la première procédure (A3) et une valeur de code (Kc) étant déterminée à l'aide de la deuxième procédure (A8),

on envoie la valeur numérique quelconque (RAND) aux dispositifs de commande périphériques (NT/A) concernés et là on l'envoie conjointement au code ($K_i$) à une procédure identique à la première procédure (A3), on détermine comme résultat une grandeur et on envoie ensuite cette grandeur au au moins un dispositif de commande (AUC) où cette grandeur est comparée à l'autre valeur numérique (SRES),

et, seulement en cas de résultat positif de la comparaison, on effectue la transmission des informations, avec un chiffrage avec la valeur de code (Kc), entre le au moins un dispositif de commande (AUC) et les dispositifs de commande périphériques (NT/A) concernés, l'information d'adresse contenue dans l'en-tête de cellule restant non chiffrée le cas échéant.

2. Procédé selon la revendication 1,
**caractérisé par le fait qu'**une autre procédure ($A_5$) comporte au moins deux générateurs (A, S) qui produisent chacun une suite pseudo-aléatoire ($a_i$, $s_i$) et qui produisent une autre suite aléatoire ($z_i$) au cours d'une influence réciproque.

3. Procédé selon la revendication 1 ou 2,
**caractérisé par le fait que** les informations à transmettre sont envoyées en entrée à l'autre procédure ($A_5$) et quittent à nouveau celle-ci sous forme chiffrée en fonction de l'algorithme qui se trouve à l'intérieur, la valeur numérique quelconque (RAND) et une autre valeur (COUNT) servant alors de grandeurs de commande.

4. Procédé selon l'une des revendications précédentes,
**caractérisé par le fait que** la grandeur de commande (COUNT) est le numéro de trame du créneau temporel.

5. Procédé selon l'une des revendications précédentes,
**caractérisé par le fait que** la transmission des informations entre l'un des dispositifs de commande périphériques (NT/A) et le au moins un dispositif de commande (AUC) s'effectue par l'intermédiaire d'un réseau ATM qui est conçu comme un réseau de transmission de télévision.

6. Procédé selon l'une des revendications précédentes,
**caractérisé par le fait qu'**on convient de plusieurs valeurs de codes ($K_c$) au moyen desquelles sont chiffrées les informations transmises au dispositif d'utilisateur ou d'abonné.

# FIG 1

# FIG 2

## FIG 3

|  |  | NT/A | CU |
|---|---|---|---|
| Generatoren A,S | 107 bit Regs | 54 CLBs | 54 CLBs |
| FiFo | 16*16*1bit Ram+ Logik | 10 CLBs | 10 CLBs |
| COUNT | 34 bit Regs | 17 CLBs | 17 CLBs |
| Synchronisierung | 34 bit Regs+Logik | 20 CLBs | 20 CLBs |
| session key Kc | 64 bit RAM/VCI | 32 CLBs 16 CLBs | 2 kByt RAM(ext) |
| Logik |  | 10 CLBs | 10 CLBs |
| Summe |  | 143 CLBs | 111 CLBs +2kB RAM (ext) |
| Auslastung eines X4013-FPGA |  | 25% | 19% |

## FIG 4

|  |  | NT/A | CU |
|---|---|---|---|
| Generator A,S | 60 bit Regs | 30 CLBs | 30 CLBs |
| FiFo | 16*16*1bit Ram+ Logik | 10 CLBs | 10 CLBs |
|  |  |  |  |
| COUNT | 28 bit Regs | 14 CLBs | 14 CLBs |
| Synchronisierung | 28 bit Regs+Logik | 16 CLBs | 16 CLBs |
| session key Kc | 32 bit RAM/VCI | 16 CLBs 16 CLBs | 1 kByt RAM 256*32bit |
| Logik |  | 10 CLBs | 10 CLBs |
| Summe |  | 96 CLBs | 80 CLBs +1kB RAM |
| Auslastung eines X4013-FPGA |  | 17% | 14% |